(19) Europäisches Patentamt
European Patent Office
Office européen des brevets

(11) **EP 4 219 006 A1**

(12) **EUROPÄISCHE PATENTANMELDUNG**

(43) Veröffentlichungstag:
**02.08.2023   Patentblatt 2023/31**

(21) Anmeldenummer: **23161527.9**

(22) Anmeldetag: **29.03.2019**

(51) Internationale Patentklassifikation (IPC):
*B01J 35/00* (2006.01)          *B01J 21/04* (2006.01)
*B01J 23/46* (2006.01)          *B01D 53/94* (2006.01)
*B01J 37/02* (2006.01)          *F01N 3/035* (2006.01)
*B01D 46/24* (2006.01)

(52) Gemeinsame Patentklassifikation (CPC):
**B01D 53/945; B01D 46/2429; B01D 46/24492;
B01J 21/04; B01J 23/464; B01J 35/0006;
B01J 37/0221; F01N 3/035;** B01D 2255/1023;
B01D 2255/1025; B01D 2255/9155; Y02T 10/12

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.04.2018   DE 102018108346**

(62) Dokumentnummer(n) der früheren Anmeldung(en)
nach Art. 76 EPÜ:
**19715866.0 / 3 774 036**

(71) Anmelder: **Umicore AG & Co. KG
63457 Hanau-Wolfgang (DE)**

(72) Erfinder:
• **DEIBEL, Naina
  64319 Pfungstadt (DE)**
• **FOERSTER, Martin
  63654 Büdingen (DE)**
• **OLTERSDORF, Antje
  79102 Freiburg (DE)**
• **KOCH, Juergen
  63457 Hanau (DE)**
• **ROESCH, Martin
  63110 Rodgau (DE)**

Bemerkungen:
Diese Anmeldung ist am 13-03-2023 als
Teilanmeldung zu der unter INID-Code 62 erwähnten
Anmeldung eingereicht worden.

(54) **BESCHICHTETER WANDFLUSSFILTER**

(57)     Die vorliegende Erfindung ist auf einen katalytisch beschichteten Wandflussfilter, ein Verfahren zu seiner Herstellung und seine Verwendung in der Minderung schädlicher Abgase eines Verbrennungsmotors gerichtet.

Fig. 2:

EP 4 219 006 A1

**Beschreibung**

Die vorliegende Erfindung ist auf einen katalytisch beschichteten Wandflussfilter, ein Verfahren zu seiner Herstellung und seine Verwendung in der Minderung schädlicher Abgase eines Verbrennungsmotors gerichtet.

Das Abgas von Verbrennungsmotoren in Kraftfahrzeugen enthält typischerweise die Schadgase Kohlenmonoxid (CO) und Kohlenwasserstoffe (HC), Stickoxide ($NO_x$) und gegebenenfalls Schwefeloxide ($SO_x$), sowie Partikel, die weitgehend aus festen kohlenstoffhaltigen Teilchen und gegebenenfalls anhaftenden organischen Agglomeraten bestehen. Diese werden als Primäremissionen bezeichnet. CO, HC und Partikel sind Produkte der unvollständigen Verbrennung des Kraftstoffs im Brennraum des Motors. Stickoxide entstehen im Zylinder aus Stickstoff und Sauerstoff der Ansaugluft, wenn die Verbrennungstemperaturen 1200°C überschreiten. Schwefeloxide resultieren aus der Verbrennung organischer Schwefelverbindungen, die in nicht-synthetischen Kraftstoffen immer in geringen Mengen enthalten sind. Die Einhaltung künftig in Europa, China, Nordamerika und Indien geltender gesetzlicher Abgasgrenzwerte für Kraftfahrzeuge erfordert die weitgehende Entfernung der genannten Schadstoffe aus dem Abgas. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Durchfluss- (flow-through) oder einen Wandfluss- (wall-flow) -wabenkörper mit einer darauf aufgebrachten katalytisch aktiven Beschichtung geleitet wird. Der Katalysator fördert die chemische Reaktion verschiedener Abgaskomponenten unter Bildung unschädlicher Produkte wie beispielsweise Kohlendioxid, Wasser und Stickstoff.

Die eben beschriebenen Durchfluss- oder Wandflusswabenkörper werden auch als Katalysatorträger, Träger oder Substratmonolithe bezeichnet, tragen sie doch die katalytisch aktive Beschichtung auf ihrer Oberfläche bzw. in den diese Oberfläche bildenden Wänden. Die katalytisch aktive Beschichtung wird häufig in einem sogenannten Beschichtungsvorgang in Form einer Suspension auf den Katalysatorträger aufgebracht. Viele derartige Prozesse sind in der Vergangenheit von Autoabgaskatalysatorherstellern hierzu veröffentlicht worden (EP1064094B1, EP2521618B1, WO10015573A2, EP1136462B1, US6478874B1, US4609563A, WO9947260A1, JP5378659B2, EP2415522A1, JP2014205108A2).

Für die jeweils möglichen Methoden der Schadstoffumwandlung im Katalysator ist die Betriebsart des Verbrennungsmotors entscheidend. Dieselmotoren werden meist mit Luftüberschuss betrieben, die meisten Ottomotoren mit einem stöchiometrischen Gemisch aus Ansaugluft und Kraftstoff. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis λ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist λ < 1 (z. B. 0,9) bedeutet dies "Luftmangel", man spricht von einem fetten Abgasgemisch, λ > 1 (z. B. 1,1) bedeutet "Luftüberschuss" und das Abgasgemisch wird als mager bezeichnet. Die Aussage λ = 1,1 bedeutet, dass 10% mehr Luft vorhanden ist, als zur stöchiometrischen Reaktion notwendig wäre.

Sofern im vorliegenden Text von mager verbrennenden Kraftfahrzeugmotoren die Rede ist, so wird hiermit hauptsächlich auf Dieselmotoren und überwiegend im Mittel mager verbrennende Ottomotoren Bezug genommen. Letztere sind überwiegend im Mittel mit magerem A/F-Verhältnis (Luft/Kraftstoff-Verhältnis) betriebene Benzinmotoren. Dagegen werden die meisten Benzinmotoren mit im Mittel stöchiometrischen Verbrennungsgemisch betrieben. Der Ausdruck "im Mittel" nimmt dabei Rücksicht auf die Tatsache, dass moderne Benzinmotoren nicht statisch bei einem festen Luft/Kraftstoffverhältnis (A/F-Verhältnis; λ-Wert) betrieben werden. Vielmehr wird durch die Motorsteuerung ein Gemisch mit einem diskontinuierlichen Verlauf der Luftzahl λ um λ = 1,0 vorgegeben, wodurch sich ein periodischer Wechsel von oxidierenden und reduzierenden Abgasbedingungen ergibt. Dieser Wechsel der Luftzahl λ ist wesentlich für das Abgasreinigungsergebnis. Hierzu wird der λ-Wert des Abgases mit sehr kurzer Zyklenzeit (ca. 0,5 bis 5 Hertz) und einer Amplitude Δλ von 0,005 ≤ Δλ ≤ 0,07 um den Wert λ = 1.0 geregelt. Im Durchschnitt ist in solchen Betriebszuständen daher das Abgas als "im Mittel" stöchiometrisch zu bezeichnen. Damit sich diese Abweichungen nicht nachteilig auf das Abgasreinigungsergebnis bei Überleiten des Abgases über den Dreiwegkatalysator auswirken, gleichen die im Dreiwegkatalysator enthaltenen Sauerstoffspeichermaterialien diese Abweichungen aus, indem sie Sauerstoff nach Bedarf aus dem Abgas aufnehmen oder ins Abgas abgeben (Catalytic Air Pollution Control, Commercial Technology, R. Heck et al., 1995, S. 90). Aufgrund der dynamischen Betriebsweise des Motors im Fahrzeug treten zeitweise jedoch weitere Abweichungen von diesem Zustand auf. Zum Beispiel bei starken Beschleunigungen oder im Schubbetrieb können Betriebszustände des Motors und damit des Abgases eingestellt werden, die im Mittel über- oder unterstöchiometrisch sein können. Mager verbrennende Ottomotoren weisen dagegen ein Abgas auf, welches überwiegend, d.h. in der überwiegenden Zeit des Verbrennungsbetriebs ein im Mittel mageres Luft/Kraftstoffverhältnis verbrennt.

Die Schadgase Kohlenmonoxid und Kohlenwasserstoffe können aus einem mageren Abgas durch Oxidation an einem geeigneten Oxidationskatalysator unschädlich gemacht werden. Bei einem stöchiometrisch betriebenen Verbrennungsmotor können alle drei Schadgase (HC, CO und NOx) über einen Dreiwegkatalysator beseitigt werden.

Die Reduktion der Stickoxide zu Stickstoff ("Entstickung" des Abgases) ist wegen des hohen Sauerstoffgehaltes eines mager verbrennenden Motors schwieriger. Ein bekanntes Verfahren ist hier die selektive katalytische Reduktion der Stickoxide (Selective Catalytic Reduction; SCR) an einem geeigneten Katalysator, kurz SCR-Katalysator genannt. Dieses Verfahren gilt gegenwärtig für die Entstickung von Magermotorenabgasen als bevorzugt. Die Verminderung der im Abgas enthaltenden Stickoxide erfolgt im SCR-Verfahren unter Zuhilfenahme eines aus einer externen Quelle in den Abgasstrang eindosierten Reduktionsmittels. Als Reduktionsmittel wird Ammoniak eingesetzt, welches die im Abgas vorhandenen Stickoxide am SCR-Katalysator zu Stickstoff und Wasser umsetzt. Das als Reduktionsmittel verwendete Ammoniak kann durch Eindosieren einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Zur Entfernung der Partikelemissionen sind Dieselpartikelfilter bzw. Benzinpartikelfilter mit und ohne zusätzliche katalytisch aktive Beschichtung geeignete Aggregate. Zur Erfüllung der gesetzlichen Normen ist es für die aktuellen und zukünftigen Applikationen zur Abgasnachbehandlung von Verbrennungsmotoren aus Kostengründen aber auch aus Bauraumgründen wünschenswert, Partikelfilter mit anderen katalytisch aktiven Funktionalitäten zu kombinieren. Der Einsatz eines Partikelfilters - ob katalytisch beschichtet oder nicht - führt zu einer im Vergleich zu einem Durchflussträger gleicher Abmessungen merklichen Erhöhung des Abgasgegendrucks und damit zu einer Verringerung des Drehmoments des Motors oder möglicherweise vermehrtem Kraftstoffverbrauch. Um den Abgasgegendruck nicht noch weiter zu erhöhen, werden die Mengen an oxidischen Trägermaterialien für die katalytisch aktiven Edelmetalle des Katalysators bzw. oxidischen Katalysatormaterialien bei einem Filter in der Regel in geringeren Mengen aufgebracht als bei einem Durchflussträger. Dadurch ist die katalytische Wirksamkeit eines katalytisch beschichteten Partikelfilters einem gleich groß dimensionierten Durchflussmonolithen häufig unterlegen.

Es hat schon einige Anstrengungen gegeben, Partikelfilter bereitzustellen, die eine gute katalytische Aktivität durch eine aktive Beschichtung aufweisen und dennoch möglichst geringen Abgasgegendruck aufweisen. Zum einen hat es sich als günstig erwiesen, wenn die katalytisch aktive Beschichtung nicht als Schicht auf der Wand eines porösen Wandflussfilters befindlich ist, sondern die Wand des Filters mit dem katalytisch aktiven Material zu durchsetzen (WO2005016497A1, JPH01-151706, EP1789190B1). Hierfür wird die Partikelgröße der katalytischen Beschichtung so gewählt, dass die Partikel in die Poren der Wandflussfilter eindringen und dort durch Kalzinieren fixiert werden können.

Eine weitere Funktionalität des Filters, die durch eine Beschichtung verbessert werden kann, ist seine Filtrationseffizienz, also die Filterwirkung selbst. In der WO2011151711A1 wird eine Methode beschrieben, mit der ein nicht beschichteter oder katalytisch beschichteter Filter mit einem trockenen Aerosol beaufschlagt wird. Das Aerosol wird durch die Verteilung eines pulverförmigen hochschmelzenden Metalloxids mit einer Partikelgröße von 0,2 $\mu$m bis 5 $\mu$m bereitgestellt und mittels eines Gasstroms über die Einlassseite eines Wandflussfilters geführt. Hierbei agglomerieren die einzelnen Partikel zu einem verbrückten Netzwerk an Partikeln und werden als Schicht auf der Oberfläche der einzelnen den Wandflussfilter durchziehenden Einlasskanäle abgeschieden. Die typische Beladung eines Filters mit dem Pulver beträgt zwischen 5 g und 50 g pro Liter Filtervolumen. Es wird ausdrücklich darauf hingewiesen, dass es nicht erwünscht ist, mit dem Metalloxid eine Beschichtung in den Poren des Wandflussfilters zu erreichen.

Eine weitere Methode zur Erhöhung der Filtrationseffizienz von katalytisch nicht aktiven Filtern wird in der WO2012030534A1 beschrieben. Hierbei wird auf den Wänden der Strömungskanäle der Einlassseite eine Filtrationsschicht ("discriminating layer") durch Ablagerung von keramischen Partikel über ein Partikelaerosol erzeugt. Die Schichten bestehen aus Oxiden von Zirkon, Aluminium oder Silicium, bevorzugt in Faserform von 1 nm bis 5 $\mu$m und haben eine Schichtdicke von mehr als 10 $\mu$m, in der Regel 25 $\mu$m bis 75 $\mu$m. Nach dem Beschichtungsprozess werden die aufgetragenen Pulverpartikel in einem Wärmeprozess kalziniert.

Ein weiteres Verfahren bei dem zur Erhöhung der Filtrationseffizienz von katalytisch nicht aktiven Wandflussfiltern eine Membran ("Trapping layer") auf den Oberflächen der Einlasskanäle von Filtern erzeugt wird, ist in der Patentschrift US8277880B2 beschrieben. Die Filtrationsmembran auf den Oberflächen der Einlasskanäle wird durch Durchsaugen eines mit Keramikpartikeln (z. B. Siliciumcarbid, Cordierit) beladenen Gasstroms realisiert. Der Wabenkörper wird nach dem Aufbringen der Filterschicht bei Temperaturen von größer 1000°C gebrannt um die Haftfestigkeit der Pulverschicht auf den Kanalwänden zu erhöhen. In EP250266A1 und EP2502662B1 werden weitere Aufwandbeschichtungen durch Pulverapplikation erwähnt.

Eine Beschichtung innerhalb der Poren eines Wandflussfilteraggregats mittels Verdüsung von trockenen Partikel, z. B. mithilfe eines Aerosolgenerators, wird in der EP2727640A1 beschrieben. Hier wird ein nicht katalytisch beschichteter Wandflussfilter mit einem z. B. Aluminiumoxidpartikel enthaltenden Gasstroms dergestalt beschichtet, dass die kompletten Partikel, die eine Partikelgröße von 0,1 $\mu$m bis 5 $\mu$m aufweisen, als poröse Füllung in den Poren des Wandflussfilters abgeschieden werden. Die Partikel selber können eine weitere Funktionalität des Filters zusätzlich zu der Filterwirkung realisieren. Beispielhaft werden diese Partikel in einer Menge von mehr als 80 g/l bezogen auf das Filtervolumen in den Poren des Filters abgeschieden. Sie füllen dabei 10% bis 50% des Volumens der Poren in den Kanalwänden aus. Dieser Filter weist sowohl mit Ruß beladen wie auch ohne Ruß eine gegenüber dem unbehandelten Filter verbesserte Filtrationseffizienz bei einem geringen Abgasgegendruck des mit Ruß beladenen Filters auf. Trotzdem besteht weiterhin Bedarf an ausreichend katalytisch aktiven Partikelfiltern, bei denen die Filtrationseffizienz im Hinblick auf den Abgasgegendruck optimiert ist. Aufgabe der vorliegenden Erfindung ist es daher, einen entsprechend katalytisch aktiven Partikelfilter anzugeben, bei dem eine ausreichende Filtrationseffizienz gekoppelt ist mit einer möglichst geringen Erhöhung des Abgasgegendrucks.

Diese und weitere sich aus dem Stand der Technik in naheliegender Weise ergebenden Aufgaben werden durch die Angabe eines Partikelfilters gemäß den Ansprüchen 1 bis 10 erfüllt. Ansprüche 11 bis 13 sind auf die Herstellung eines erfindungsgemäßen Partikelfilters gerichtet. Anspruch 14 zielt auf die Verwendung des Partikelfilters zur Abgasnachbehandlung von Verbrennungsmotoren ab.

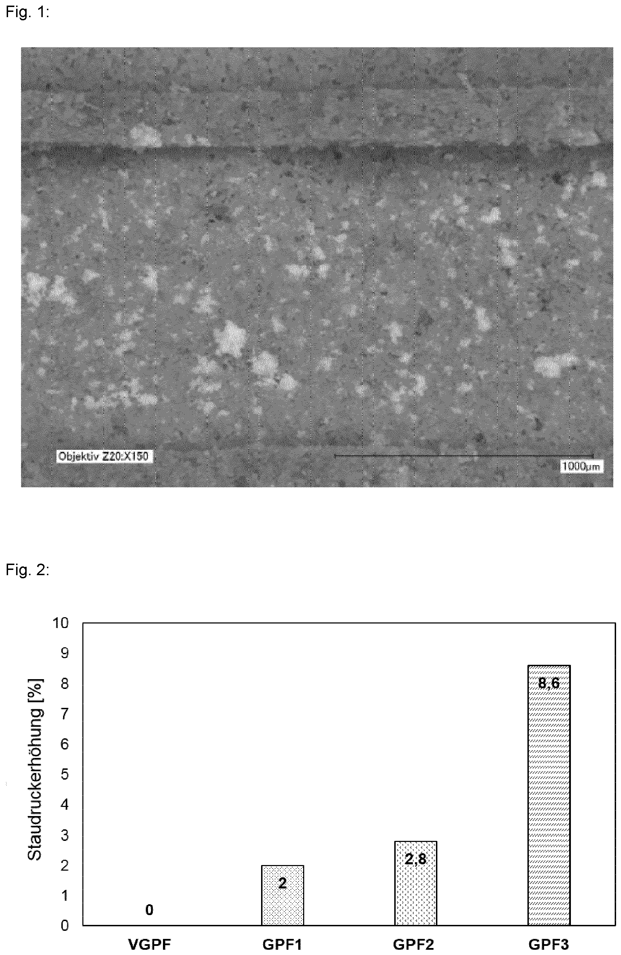

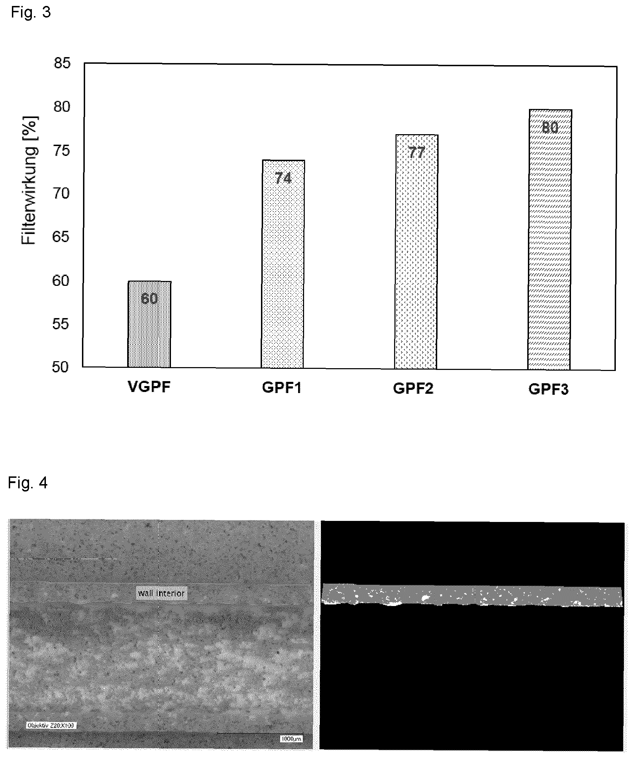

Dadurch, dass man einen katalytisch aktiven Wandflussfilter zur Verminderung der Schadstoffe im Abgas eines Verbrennungsmotors bereitstellt, wobei dieser mit katalytisch aktivem Material in der Wand beschichtete, trockene Filter auf dessen Eingangsseite dergestalt mit einem trockenen Pulver-Gas-Aerosol, welches eine hochschmelzende Verbindung aufweist, gezielt beaufschlagt wird, dass das Pulver sich in den Poren der Filterwände niederschlägt und keine zusammenhängende Schicht auf den Wänden des Filters ausbildet, gelangt man überaus erfolgreich zur Lösung der gestellten Aufgabe. Es wird angenommen, dass das trockene Verdüsen von ausreichend kleinen Pulverpartikeln im trockenen Zustand dazu führt, dass die Partikel nicht agglomerieren. Das Beaufschlagen des trockenen, katalytisch beschichteten Filters mit dem trockenen Pulver-Gas-Aerosol führt dazu, dass sich die Pulverteilchen dem Strom des Gases folgend in den Poren des Filters abscheiden (Fig. 1). Hierdurch wird eine hervorragende Filtrationseffizienz des katalytisch beschichteten Filters bei ausreichend geringem Abgasgegendruck erreicht (Fig. 2/3). Die Performance des Filters hinsichtlich dessen katalytischer Aktivität wird hierdurch nicht beeinträchtigt, sondern verbessert sich überraschenderweise unter bestimmten Bedingungen. Die hier beschriebenen katalytisch beschichteten und anschließend mit Pulver beaufschlagten Filter unterscheiden sich von denen, die im Abgasstrang eines Fahrzeugs durch Ascheablagerung während des Betriebs entstehen. Erfindungsgemäß werden die katalytisch aktiven Filter gezielt mit einem bestimmten, trockenen Pulver bestäubt. Dies führt dazu, dass die Balance zwischen Filtrationseffiziens und Abgasgegendruck von Anfang an gezielt eingestellt werden kann. Nicht mitumfasst von der vorliegenden Erfindung sind daher Wandflussfilter, bei denen sich undefinierte Ascheablagerungen aus der Verbrennung im Zylinder während des Fahrbetriebs erfolgt sind.

Trocken im Sinne der vorliegenden Erfindung bedeutet demgemäß den Ausschluss der Anwendung einer Flüssigkeit wie z.B. Wasser. Insbesondere die Herstellung einer Suspension des Pulvers in einer Flüssigkeit zur Verdüsung in einen Gasstrom sollte vermieden werden. Sowohl für den Filter als auch für das Pulver kann eine gewisse Feuchte ggf. tolerierbar sein, sofern das Erreichen des Ziels - die möglichst vollständige Abscheidung des Pulvers in den Poren - nicht negativ beeinflusst wird. In der Regel ist das Pulver rieselfähig und zerstäubbar. Die Feuchtigkeit des Pulvers bzw. des Filters im Zeitpunkt der Beaufschlagung mit dem Pulver sollte weniger als 20%, bevorzugt weniger als 10% und ganz besonders bevorzugt weniger als 5% (gemessen bei 20°C und Normaldruck ISO 11465 neueste Fassung Anmeldetag) betragen.

Als Wandflussmonolithe oder Wandflussfilter können alle im Stand der Technik üblichen keramischen Materialien eingesetzt werden. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die Porosität der unbeschichteten Wandflussfilter beträgt in der Regel mehr als 40%, generell von 40% bis 75%, besonders von 50% bis 70% [gemessen nach DIN 66133 - neueste Fassung am Anmeldetag]. Die durchschnittliche Porengröße der unbeschichteten Filter beträgt wenigstens 7 $\mu$m, z. B. von 7 $\mu$m bis 34 $\mu$m, bevorzugt mehr als 10 $\mu$m, insbesondere mehr bevorzugt von 10 $\mu$m bis 25 $\mu$m oder ganz bevorzugt von 15 $\mu$m bis 20 $\mu$m [gemessen nach DIN 66134 neueste Fassung am Anmeldetag]. Die fertiggestellten Filter mit einer Porengröße von in der Regel 10 $\mu$m bis 20 $\mu$m (katalytisch beschichtet) und einer Porosität von 50% bis 65% (katalytisch beschichtet) sind besonders bevorzugt.

Das Aerosol aus dem Gas und dem Pulver kann nach Maßgabe des Fachmannes hergestellt werden. Hierzu wird gemeinhin ein Pulver mit einem Gasvermischt. Dieses so hergestellte Gemisch aus dem Gas und dem Pulver wird dann vorteilhafter Weise in einen Gasstrom eingedüst, welcher das fein verteilte Pulver in die Einlassseite des Wandflussfilters trägt. Als Gase zur Herstellung des Aerosols und zum Eintragen in den Filter können alle dem Fachmann für den vorliegenden Zweck infrage kommende Gase herangezogen werden. Ganz besonders bevorzugt ist der Einsatz von Luft. Es können jedoch auch andere Reaktionsgase herangezogen werden, die entweder eine oxidierende oder eine reduzierende Aktivität gegenüber dem eingesetzten Pulver entwickeln können. Ebenfalls kann sich bei bestimmten Pulvern der Einsatz von Edelgasen als vorteilhaft erweisen. Auch Mischungen der aufgezählten Gase sind vorstellbar.

Pulver, welche bevorzugt in der vorliegenden Erfindung zur Erzeugung des Aerosols herangezogen werden, sind dem Fachmann hinlänglich bekannt. In der Regel sind dies hochschmelzende Metallverbindungen, die gemeinhin als Trägermaterialien für Katalysatoren im Autoabgasbereich herangezogen werden. Bevorzugt werden entsprechende Metalloxid-, Metallsulfat-, Metallphosphat-, Metallcarbonat- oder Metallhydroxidpulver eingesetzt. Ganz besonders bevorzugt ist der Einsatz von einem Aerosol, welches ein Gemisch aus Luft und einem Metalloxidpulver darstellt. Die für die Metallverbindungen infrage kommenden Metalle sind insbesondere solche ausgewählt aus der Gruppe der Alkali-, Erdalkali- bzw. Erdmetalle oder Übergangsmetalle. Bevorzugt werden solche Metalle ausgewählt aus der Gruppe Calcium, Magnesium, Strontium, Barium, Aluminium, Silizium, Titan, Zirkon, Cer eingesetzt. Diese Metalle können vorzugsweise wie gesagt als Oxide eingesetzt werden. Ganz besonders bevorzugt ist der Einsatz von Ceroxid, Titandioxid, Zirkondioxid, Siliziumdioxid, Aluminiumoxid oder Mischungen oder Mischoxiden derselben. Unter dem Begriff Mischoxid (feste Lösungen von einem Metalloxid in mindestens einem anderen) wird vorliegend auch der Einsatz von Zeolithen und Zeotypen verstanden. Im Rahmen der Erfindung sind Zeolithe und Zeotype definiert wie in der WO2015049110A1.

Der Wandflussfilter, welcher erfindungsgemäß mit dem Pulver-Gas-Aerosol beaufschlagt wird, trägt eine katalytische Aktivität bereits in sich. Unter katalytischer Aktivität wird vorliegend die Fähigkeit verstanden, schädlich Bestandteile des Abgases von Verbrennungsmotoren in weniger schädliche zu verwandeln. Insbesondere sind hier die Abgasbestandteile NOx, CO und HC zu nennen. Diese katalytische Aktivität wird nach Maßgabe des Fachmanns durch eine Beschichtung des Wandflussfilters in dessen Wänden mit einem katalytisch aktiven Material bereitgestellt. Unter dem Begriff des Beschichtens wird demgemäß das Aufbringen von katalytisch aktiven Materialien auf einen Wandflussfilter verstanden. Die Beschichtung übernimmt die eigentliche katalytische Funktion. Vorliegend erfolgt die Beschichtung durch das Aufbringen einer entsprechend wenig viskosen wässrigen Suspension der katalytisch aktiven Komponenten - auch Washcoat genannt - in die Wand des Wandflussfilters, z. B. gemäß EP1789190B1. Nach dem Aufbringen der Suspension wird der Wandflussfilter getrocknet und gegebenenfalls bei erhöhter Temperatur kalziniert. Der katalytisch beschichtete Filter besitzt vorzugsweise eine Beladung von 20 g/l bis 200 g/l, vorzugsweise 30 g/l bis 150 g/l. Die geeignetste Beladungsmenge eines in der Wand beschichteten Filters hängt von seiner Zelldichte, seiner Wandstärke und der Porosität ab. Bei gängigen mittelporösen Filtern (<60% Porosität) mit z.B. 200 cpsi Zelldichte und 8 mil Wandstärke liegt die bevorzugte Beladung bei 20 g/l bis 30 g/l (bezogen auf das äußere Volumen des Filtersubstrats). Hochporöse Filter (>60% Porosität) mit z.B. 300 cpsi und 8 mil haben eine bevorzugte Beladungsmenge von 25 g/l bis 150 g/l besonders bevorzugt von 50 g/l bis 100 g/l.

Im Prinzip sind alle dem Fachmann für den Autoabgasbereich bekannten Beschichtungen für die vorliegende Erfindung geeignet. Bevorzugt kann die katalytische Beschichtung des Filters ausgewählt sein aus der Gruppe bestehend aus Dreiwegkatalysator, SCR-Katalysator, Stickoxidspeicherkatalysator, Oxidationskatalysator, Rußzündbeschichtung. Hinsichtlich der einzelnen in Frage kommenden katalytischen Aktivitäten und deren Erklärung wird auf die Ausführungen in der WO2011151711A1 verwiesen.

Damit das Pulver des Pulver-Gas-Aerosols sich ausreichend gut in den Poren des katalytisch beschichteten Wandflussfilters abscheiden kann, sollte der Partikeldurchmesser im Aerosol zumindest kleiner sein als die Poren des Wandflussfilters. Dies kann ausgedrückt werden dadurch, dass das Verhältnis von mittlerem Partikeldurchmesser (gemessen gemäß neuester ISO 13320 am Anmeldetag) d50 im trockenen Aerosol und dem mittleren Porendurchmesser des Wandflussfilters nach Beschichtung (gemessen nach DIN 66134 - neueste Fassung am Anmeldetag) zwischen 0,03 - 2, vorzugsweise zwischen 0,05 - 1,43 und ganz besonders bevorzugt zwischen 0,05 - 0,63 liegt. Hierdurch wird erreicht, dass sich die Partikel des Pulvers dem Gasstrom folgend in den Poren der Wände des Wandflussfilters niederschlagen können und demzufolge keine zusammenhängende Schicht auf der Wand ausbilden (Fig. 1).

Durch die Pulverbeaufschlagung kann ein Gradient in Längsrichtung des Filters von der Einlass- zur Auslassseite hin eingestellt werden. In einer bevorzugten Ausführungsform befindet sich dabei mehr Pulver in der Nähe der Ausgangsstopfen des Einlasskanals und deutlich weniger Pulver am Eingang des Filters (zur Motorseite hin). Der bei der Beschichtung entstandene Gradient hinsichtlich der Beladungsmenge ist vorteilhaft für eine weiterhin erhöhte Filtrationseffizienz. Dabei füllt das Pulver insbesondere die gro-βen Poren des Filtersubstrats aus. Wichtig dabei ist, dass bei diesem Prozess keine "Pulvermembran" - also keine Pulverschicht - auf der Filterwand entsteht (Fig. 1). Weiterhin ist eine bevorzugte Ausführung der Pulverbelegung dadurch gekennzeichnet, dass 5 % bis 50 % des gesamten Porenvolumens der porösen Filterwand zwischen Einlass- und Auslasskanälen mit Pulver gefüllt ist, besonders bevorzugt 5 % bis 25 %, ganz besonders bevorzugt 8 % bis 15 %. Der Belegungsgrad des Porenvolumens der porösen Filterwände wurde mittels Bildanalyse aus Lichtmikroskopiebildern bestimmt (Bereich "wall interior" in Fig. 4). In dieser Art der Analyse wird die durchschnittliche Farbe der Wandoberfläche des nicht mit Pulver belegten Auslasskanals als Referenz zur Bestimmung der mit Pulver belegten Bereiche im Einlasskanal zugrunde gelegt, wobei der Farbabstand nach CIE76 der International Commission on Illumination mit einem geringsten noch unterscheidbaren Farbabstand von 2,33 festgelegt wurde.

Es erschließt sich dem Fachmann ohne weiteres, dass zur Abscheidung der Partikel des Pulvers ausschließlich in den Poren der Wände des Wandflussfilters eine bestimmte Menge an Pulver nicht überschritten werden darf. Ansonsten würden sich die Poren erfindungsgemäß füllen und alles weitere Material würde sich dann nur noch auf den Kanalwänden des Wandflussfilters absetzen können. Daher beträgt die Obergrenze der Beladung des Wandflussfilters mit dem Pulver je nach Porosität und Porengröße des Wandflussfilters einen Wert, bei dem die Poren an der Einlassseite über den Querschnitt vollständig mit dem Pulver gefüllt sind und noch kein weiteres Pulver sich auf den Kanalwänden abscheidet. In der Regel liegt die Beladung des Filters mit dem Pulver bei nicht mehr als 50 g/l bezogen auf das Filtervolumen. Bevorzugt beträgt der Wert nicht mehr als 20 g/l, ganz besonders bevorzugt nicht mehr als 10 g/l. Eine untere Grenze bildet naturgemäß die angestrebte Erhöhung der Filtrationseffizienz.

Das Pulver kann erfindungsgemäß wie oben beschrieben als solches eingesetzt werden. Ebenfalls vorstellbar ist jedoch der Einsatz von trockenem Pulver, welches eine katalytische Aktivität im Hinblick auf die Abgasnachbehandlung trägt. Demzufolge kann das Pulver selbst ebenfalls hinsichtlich der Verminderung der Schadstoffe im Abgas eines Verbrennungsmotors katalytisch aktiv sein. Hierfür kommen alle dem Fachmann bekannten Aktivitäten in Betracht, wie z.B. TWC-, DOC-, SCR-, LNT- oder den Rußabbrand beschleunigende Katalysatoren. Gemeinhin wird das Pulver die gleiche katalytische Aktivität aufweisen, wie die katalytische Beschichtung des Filters. Hierdurch wird die katalytische Gesamtaktivität des Filters gegenüber nicht mit Pulver beschichteten Filtern nochmals gesteigert. Insofern kann es sein, dass zum Beispiel Aluminiumoxid mit einem Edelmetall imprägniert für die Herstellung des Pulver-Gas-Aerosols herangezogen wird. Ebenfalls vorstellbar ist, dass für die SCR-Reaktion katalytisch aktives Material eingesetzt wird. Dabei kann das Pulver zum Beispiel aus mit Übergangsmetallionen ausgetauschten Zeolithen oder Zeotypen bestehen. Ganz besonders bevorzugt ist der Einsatz von Eisen und/oder Kupfer ausgetauschten Zeolithen in diesem Zusammenhang. Äußerst bevorzugt wird als Material zur Herstellung des Pulver-Gas-Aerosols CuCHA (Kupfer ausgetauschtes Chabasit; http://europe.iza-structure.org/IZA-SC/frame-work.php?STC=CHA) oder CuAEI (http://europe.iza-structure.org/IZA-SC/frame-work.php?STC=AEI) verwendet.

Der erfindungsgemäß hergestellte und katalytisch beschichtete Wandflussfilter zeigt eine hervorragende Filtrationseffizienz bei nur moderatem Anstieg des Abgasgegendrucks verglichen mit einem nicht mit Pulver beaufschlagten Wandflussfilter im frischen Zustand. Bevorzugt zeigt der erfindungsgemäße Wandflussfilter eine Erhöhung der Filtrationseffizienz von mindestens 7 Absolut%, vorzugsweise mindestens 20 Absolut% und ganz besonders bevorzugt mindestens 40 Absolut% bei einer relativen Erhöhung des Abgasgegendrucks des frischen Wandflussfilters von höchstens 40%, vorzugsweise von höchsten 20% und ganz besonders bevorzugt höchstens 10% verglichen mit einem nicht mit Pulver behandelten, frischen mit katalytisch aktivem Material beschichteten Filter. Das Pulver lagert sich - wie gesagt - exklusiv nur in die offenen Poren des Filters ein und bildet eine poröse Matrix. Die geringe Staudruckerhöhung ist darauf zurückzuführen, dass durch die erfindungsgemäße Beaufschlagung des Filters mit einem Pulver der Querschnitt der Kanäle auf der Eingangsseite nicht verringert wird. Es wird angenommen, dass das Pulver in sich eine poröse Struktur bildet, was sich vermutlich positiv auf den Staudruck auswirkt. Daher sollte ein erfindungsgemäßer Filter gegenüber denen des Standes der Technik, bei denen ein Pulver auf den Wänden der Einlassseite eines Filters abgeschieden wurde, ebenfalls einen besseren Abgasgegendruck zeigen.

Ebenfalls Gegenstand der vorliegenden Erfindung ist ein Verfahren zur Herstellung eines erfindungsgemäßen katalytisch aktiven Wandflussfilters. Im Prinzip weiß der Fachmann, wie er ein Aerosol aus einem Pulver und einem Gas herzustellen hat, um dieses dann über einen Gasstrom durch den mit dem Pulver zu beaufschlagenden Filter zu leiten. Erfindungsgemäß wird ein Trägergas mit einem Pulver beaufschlagt und dieses in einen Filter eingesaugt. Dadurch wird erreicht, dass das Pulver sich in dem Gasstrom ausreichend gut verteilen kann, um auf der Einlassseite des Wandflussfilters in die Einlasskanäle des Filters eindringen zu können.

Hierbei lagert sich das Pulver ausschließlich in den zugänglichen Poren der Filterwände ab, ohne eine partielle oder kontinuierliche Schicht auf der Filterwand in den Einlasskanälen auszubilden. Ein Konzentrationsgradient des Pulvers über die axiale Länge des Trägers kann vorteilhaft z.B. durch Verwendung unterschiedlicher Strömungsbrecher im Aerosol-Gasstrom vor der Einlassseite des Trägers sowie durch Anpassung der Beschichtungsparameter wie Strömungsgeschwindigkeit der Trägerluft und Zerstäuberluft eingestellt werden. Auch die physikalischen Parameter des verwendeten Pulvers wie z.B. die Schüttdichte, Restfeuchtegehalt und Partikelgrößenverteilung können gezielt zur Ausbildung des gewünschten und weiter vorne beschriebenen Gradienten verwendet werden. Die Zugabe kann in kontinuierlicher Weise erfolgen, bis die ausreichende Menge an Pulver im Filter abgeschieden ist. Ebenfalls möglich ist eine pulsierte Zugabe dergestalt, dass man das mit Druckgas beaufschlagte Pulver periodisch in den durch den Filter gesaugten Gasstrom so lange eindosiert, bis die ausreichende Menge an Pulver im Filter abgeschieden ist. Das Pulver kann nicht nur kontinuierlich oder pulsierend in einen permanent durch den Filter fließenden Gasstrom eingedüst werden, sondern auch vorab in eine separate Pufferkammer versprüht werden. Nach dem Versprühen des Pulvers öffnet sich eine Klappe zu einer Kammer, in der das Substrat eingespannt ist. Durch einen Saugimpuls kann dann das Gas-Pulver-Gemisch aus der Pufferkammer in das Substrat eingebracht werden. Abhängig davon, welche Pulvermenge in das Substrat eingebracht werden soll, kann dieser Prozess beliebig oft wiederholt werden. Apparate und Verfahren, bei denen eine solche Dosierung eines Pulvers beschrieben wird, werden im Stand der Technik gewürdigt (DE4225970C1, US8495968B2, US8632852B2, US8534221 B2, US8277880B2; siehe auch weiter vorne).

Um das Pulver ausreichend tief in die Poren an der Oberfläche der Filterwand auf der Einlassseite des Filters ziehen zu können, ist eine gewisse Saugleistung (sofern das Pulver durch den Filter gesaugt wird) oder eine Druckleistung (sofern das Pulver durch den Filter gedrückt wird) oder ggf. beides von Nöten. Der Fachmann kann sich hier in orientierenden Versuchen für den jeweiligen Filter und das jeweilige Pulver selbst ein Bild machen. Es hat sich herausgestellt, dass das Aerosol (Pulver-Gas-Gemisch) vorzugsweise mit einer Geschwindigkeit von 5 m/s bis 50 m/s, mehr bevorzugt 10 m/s bis 40 m/s und ganz besonders bevorzugt 15 m/s bis 35 m/s durch den Filter gesaugt und/oder gedrückt wird. Hierdurch wird ebenfalls eine vorteilhafte Adhäsion des applizierten Pulvers erreicht. Bei schlecht haftenden Pulvern kann ggf. eine Nachbehandlung mit einem verklebenden Agens helfen.

Wie schon beschrieben wird das Pulver zuerst in ein Aerosol umgewandelt und anschließend in einen Gasstrom versprüht. Dies kann nach Maßgabe des Fachmannes erfolgen (EP2371451B1; EP2371452B1; EP2388072A1). Anschließend trägt der Gasstrom das fein verteilte Pulver in die Einlassseite des Wandflussfilters. Hier schlägt sich dann das Pulver ausschließlich in den Poren der Kanalwände ab. Dies wird im Wesentlichen dadurch bewerkstelligt, dass das Pulver bei der Beaufschlagung des Wandflussfilters im Sinne der Erfindung trocken ist. Dieses wird ggf. mit der Umgebungsluft vermischt auf den Filter aufgebracht. Ohne an eine bestimmte Theorie gebunden zu sein, wird angenommen, dass diese Art und Weise der Applikation des Pulvers einem Verbacken oder Agglomerieren der einzelnen Pulverbestandteile entgegenwirkt. Dadurch wird die ursprüngliche Teilchengröße der Pulverteilchen im Aerosol konserviert. Hierdurch ist es dann möglich, die Pulverteilchen in die Wandporen des Wandflussfilters und nicht wie im Stand der Technik beschrieben auf die Poren und auf die Wände der Einlasskanäle abzuscheiden.

Ebenfalls Gegenstand der vorliegenden Erfindung ist die Verwendung eines erfindungsgemäßen Wandflussfilters zur Minderung schädlicher Abgase eines Verbrennungsmotors. Als Einsatzzwecke können im Prinzip alle dem Fachmann hierfür in Frage kommenden katalytischen Abgasnachbehandlungen (siehe vorne) mit einem Filter dienen, insbesondere jedoch solche mit SCR-katalytisch beschichteten Filtern (SDPF) bzw. dreiwegkatalytisch beschichteten Filter (catalyzed Gasoline Particle Filter, cGPF). Für alle diese Anwendungen eignen sich die nach dem erfindungsgemäßen Verfahren hergestellten Katalysatoren. Bevorzugt ist die Anwendung der erfindungsgemäßen Filter zur Behandlung von Abgasen eines stöchiometrisch betriebenen Verbrennungsmotors.

Erfindungsgemäß einzusetzende Wandflussfilter mit einer katalytischen Beschichtung, welche im stöchiometrischen Abgas ($\lambda$ = 1 Bedingungen) Stickoxide und Kohlenwasserstoffe und Kohlenmonoxid (HC, CO und NOx) beseitigen, werden meist als katalytisch aktivierte Benzinpartikelfilter (catalyzed Gasoline Partculate Filters, cGPF) bezeichnet. Ferner können sie die Oxide des Stickstoffs unter fetten Abgasbedingungen und CO und HC unter mageren Bedingungen umsetzen. Sie enthalten als katalytisch aktive Komponenten zumeist Metalle der Platingruppe, wie Pt, Pd und Rh, wobei Pd und Rh besonders bevorzugt sind. Die katalytisch aktiven Metalle sind häufig hochdispers auf hochoberflächigen Oxiden des Aluminiums, Zirkoniums und Titans oder Mischungen davon abgeschieden, welche durch weitere Übergangselemente wie z. B. Lanthan, Yttrium, Praseodym, etc. stabilisiert sein können. Ferner enthalten Dreiwegkatalysatoren Sauerstoffspeichermaterialien (z. B. Ce/Zr Mischoxide; siehe unten). Eine geeignete dreiwegekatalytische Beschichtung ist beispielsweise in EP1181970B1, EP1541220B1, WO2008113445A1, WO2008000449A2 beschrieben, auf die hiermit Bezug genommen wird.

Sauerstoff speichernde Materialien besitzen Redox-Eigenschaften und können mit oxidierenden Komponenten wie Sauerstoff oder Stickoxiden in oxidierender Atmosphäre bzw. mit reduzierenden Komponenten wie Wasserstoff oder Kohlenmonoxid in reduzierender Atmosphäre reagieren. In der EP1911506A1 wird die Ausführung der Abgasnachbehandlung eines im Wesentlichen im stöchiometrischen Bereich arbeitenden Verbrennungsmotors beschrieben. Eingesetzt wird dort ein mit einem Sauerstoffspeichermaterial versehener Partikelfilter. Vorteilhafter Weise besteht ein derartiges Sauerstoff speicherndes Material aus einem Cer/Zirkon-Mischoxid. Weitere Oxide von insbesondere Seltenerdmetallen können vorhanden sein. So enthalten bevorzugte Ausgestaltungen des erfindungsgemäßen Partikelfilters zusätzlich Lanthanoxid, Yttriumoxid oder Neodymoxid. Es wird diesbezüglich auch auf die Offenbarung der US6605264BB und US6468941BA verwiesen. Weitere derartige Speichermaterialien und Dreiwegkatalysatoren sind z.B. in der WO05113126A1, US6387338BA, US7041622BB, EP2042225A1 beschrieben.

Die in den Veröffentlichungen beschriebenen Sauerstoff speichernden Materialien sind in der Lage, ihren Oxidationszustand in Abhängigkeit von der umgebenden Atmosphäre zu ändern. Beispiele für Sauerstoff speichernde Materialien sind Cer- und Praseodymoxid oder diese Oxide enthaltende Mischoxide, welche zusätzlich Oxide von Metallen ausgewählt aus der Gruppe von Zirkon, Neodym, Yttrium und Lanthan enthalten können. Häufig werden diese Sauerstoff-speichernde Materialien mit Edelmetallen wie Pd, Rh und /oder Pt aktiviert, wodurch sich die Speicherkapazität und Speichercharakteristik modifizieren lässt. Diese Stoffe sind in der Lage, im Mageren Sauerstoff aus dem Abgas zu entfernen und unter fetten Abgasbedingungen wieder frei zu setzen. Dadurch wird verhindert, dass die beim kurzzeitigen Abweichen des Kraftstoff-Luft Verhältnisses von $\lambda$ = 1 ins Magere der NOx-Umsatz über dem TWC abnimmt und es zu NOx-Durchbrüchen kommt. Ferner verhindert ein gefüllter Sauerstoffspeicher, dass es zu HC- und CO-Durchbrüchen kommt, wenn das Abgas kurzzeitig ins Fette übergeht, da unter fetten Abgasbedingungen zuerst der gespeicherte Sauerstoff mit dem überschüssigen HC und CO abreagiert, bevor es zum Durchbruch kommt. Der Sauerstoffspeicher dient in diesem Falle als Puffer gegen Schwankungen um λ = 1. Ein teilweise gefüllter Sauerstoffspeicher weist die beste Voraussetzung auf, um kurzzeitige Abweichungen von λ = 1 abfangen zu können. Um den Füllstand des Sauerstoffspeichers im Betrieb feststellen zu können, werden Sauerstoffsensoren (Lambdasonden) verwendet.

Die Sauerstoffspeicherkapazität korreliert mit dem Alterungszustand des gesamten Dreiwegkatalysators. Die Bestimmung der Speicherkapazität dient im Rahmen der OBD (On Board Diagnose) zur Erkennung der aktuellen Aktivität und somit des Alterungszustandes des Katalysators.

Verschiedene katalytische Funktionen können auch miteinander kombiniert werden. So können die eben genannten Dreiwegkatalysatoren mit einer Stickoxidspeicherfunktionalität ausgestattet werden (TWNSC). Diese Katalysatoren bestehen wie eingangs ausgeführt aus Materialien, die dem Katalysator unter stöchiometrischen Abgasbedingungen die Funktion eines Dreiwegkatalysators verleihen und die unter mageren Abgasbedingungen eine Funktion für die Speicherung von Stickoxiden aufweisen. Diese gespeicherten Stickoxide werden bei kurzen fetten Betriebsphasen regeneriert, um die Speicherfähigkeit wiederherzustellen. Die Herstellung eines entsprechenden TWNSCs erfolgt vorzugsweise durch Zusammenfügen von Materialen, die für den Aufbau eines Dreiwegkatalysators und eines Stickoxidspeicherkatalysators benutzt werden. Die beiden hier beschriebenen Funktionen des TWNSCs können dabei auf einem Träger vermengt oder getrennt voneinander in unterschiedlichen Schichten oder Zonen vorliegen. Eine besonders bevorzugte Ausführungsform für einen solchen Katalysator wird beispielsweise in der WO2010097146A1 oder WO2015143191A1 beschrieben. Vorzugsweise wird während der Regeneration ein Luft-Kraftstoff-Gemisch aufrechterhalten, welches einem λ von 0,8 bis 1 entspricht. Besonders bevorzugt liegt dieser Wert zwischen 0,85 und 0,99, ganz besonders bevorzugt zwischen 0,95 und 0,99.

Eine weitere Anwendung ist die Entfernung von Stickoxiden aus mageren Abgasgemischen mittels dem SCR-Verfahren. Zu dieser SCR-Behandlung des vorzugsweise mageren Abgases wird in dieses Ammoniak oder eine Ammoniakvorläuferverbindung eingespritzt und beides über einen erfindungsgemäßen SCR-katalytisch beschichteten Wandflussfilter geleitet. Die Temperatur über dem SCR-Filter sollte dabei zwischen 150°C und 500°C, bevorzugt zwischen 200°C und 400°C oder zwischen 180°C und 380°C betragen, damit die Reduktion möglichst vollständig von Statten gehen kann. Besonders bevorzugt ist ein Temperaturbereich von 225°C bis 350°C für die Reduktion. Weiterhin werden optimale Stickoxid-Umsätze nur erzielt, wenn ein molares Verhältnis von Stickstoffmonoxid zu Stickstoffdioxid vorliegt (NO/ $NO_2$ = 1) bzw. das Verhältnis $NO_2/NO_X$ = 0,5 ist (G. Tuenter et al., Ind. Eng. Chem. Prod. Res. Dev. 1986, 25, 633-636; EP1147801B1; DE2832002A1; Kasaoka et al., Nippon Kagaku Kaishi (1978), 6, 874 - 881; Avila et al., Atmospheric Environment (1993), 27A, 443 - 447). Optimale Umsätze beginnen mit 75% Konvertierung bereits bei 250°C bei gleichzeitig optimaler Selektivität zu Stickstoff werden gemäß der Stöchiometrie der Reaktionsgleichung

$$2\ NH_3 + NO + NO_2 \rightarrow 2\ N_2 + 3\ H_2O$$

nur mit einem $NO_2$/NOx-Verhältnis von um die 0,5 erzielt. Dies gilt nicht nur für SCR-Katalysatoren auf der Basis von Metall-ausgetauschten Zeolithen, sondern für alle gängigen, d.h. kommerziell erhältlichen SCR-Katalysatoren (sogenannte Fast-SCR). Ein entsprechender NO:$NO_2$-Gehalt kann durch Oxidationskatalysatoren, welche stromauf des SCR-Katalysators positioniert werden, erreicht werden.

Die eingesetzten Einspritzvorrichtungen können vom Fachmann beliebig gewählt werden. Geeignete Systeme können der Literatur entnommen werden (T. Mayer, Feststoff-SCR-System auf Basis von Ammoniumcarbamat, Dissertation, TU Kaiserslautern, 2005). Das Ammoniak kann über die Einspritzvorrichtung als solches oder in Form einer Verbindung in den Abgasstrom eingebracht werden, die bei den Umgebungsbedingungen Ammoniak entstehen lässt. Als solche kommen u.a. wässrige Lösungen von Harnstoff oder Ammoniumformiat in Frage, ebenso wie festes Ammoniumcarbamat. Diese können aus einer bereitgestellten, dem Fachmann an sich bekannten Quelle entnommen und in geeigneter Art und Weise dem Abgasstrom zugefügt werden. Besonders bevorzugt setzt der Fachmann Einspritzdüsen (EP0311758A1) ein. Mittels dieser wird das optimale Verhältnis von NH$_3$/NOx eingestellt, damit eine möglichst vollständige Umsetzung der Stickoxide zu $N_2$ erfolgen kann.

Wandflussfilter mit einer SCR-katalytischen Funktion werden als SDPF bezeichnet. Häufig besitzen diese Katalysatoren eine Funktion zur Speicherung von Ammoniak und eine Funktion dahingehend, dass Stickoxide mit Ammoniak zusammen zu unschädlichem Stickstoff reagieren können. Ein NH$_3$-speichernder SCR-Katalysator kann nach dem Fachmann bekannten Typen ausgebildet sein. Vorliegend ist dies ein mit einem für die SCR-Reaktion katalytisch aktiven Material beschichteter Wandflussfilter, bei dem das katalytisch aktive Material - gemeinhin der "Washcoat" genannt - in den Poren des Wandflussfilters vorhanden ist. Allerdings kann dieser neben der im eigentlichen Sinn katalytisch wirksamen Komponente auch weitere Materialien wie Binder aus Übergangsmetalloxiden und hochoberflächige Trägeroxide wie Titanoxid, Aluminiumoxid, insbesondere gamma-$Al_2O_3$, Zirkon- oder Ceroxid enthalten. Als SCR-Katalysatoren eigenen sich auch solche, die aus einem der unten aufgeführten Materialien aufgebaut sind. Es können jedoch auch zonierte oder mehrschichtige Anordnungen oder auch Anordnungen aus mehreren Bauteilen hintereinander (bevorzugt zwei oder drei Bauteile) mit gleichen oder verschiedenen Materialien als SCR-Komponente verwendet werden. Auch Mischungen verschiedener Materialien auf einem Substrat sind denkbar.

Das erfindungsgemäß diesbezüglich eingesetzte eigentliche katalytisch aktive Material wird bevorzugt aus der Gruppe der übergangsmetallausgetauschten Zeolithe oder zeolithähnlichen Materialien (Zeotype) ausgewählt. Derartige Verbindungen sind dem Fachmann hinreichend bekannt. Bevorzugt sind diesbezüglich Materialien aus der Gruppe bestehend aus Levynit, AEI, KFI, Chabazit, SAPO-34, ALPO-34, Zeolith $\beta$ und ZSM-5. Besonders bevorzugt werden Zeolithe bzw. zeolithähnliche Materialien vom Chabazit-Typ, insbesondere CHA oder SAPO-34, sowie LEV oder AEI verwendet. Diese Materialien sind, um eine ausreichende Aktivität zu gewährleisten, vorzugsweise mit Übergangsmetallen aus der Gruppe bestehend aus Eisen, Kupfer, Mangan und Silber versehen. Ganz besonders vorteilhaft ist Kupfer in diesem Zusammenhang zu nennen. Das Metall zu Gerüstaluminium- oder beim SAPO-34 Gerüstsilizium-Verhältnis liegt in der Regel zwischen 0,3 und 0,6, vorzugsweise bei 0,4 bis 0,5. Der Fachmann weiß dabei, wie er die Zeolithe oder das zeolithähnliche Material mit den Übergangsmetallen zu versehen hat (EP0324082A1, WO1309270711A1, WO2012175409A1 sowie dort zitierte Literatur), um eine gute Aktivität gegenüber der Reduktion von Stickoxiden mit Ammoniak bereitstellen zu können. Ferner können auch Vanadiumverbindungen, Ceroxide, Cer-/Zirkonmischoxide, Titandioxid sowie wolframhaltige Verbindungen und Mischungen davon als katalytisch aktives Material verwendet werden.

Materialien, welche sich darüber hinaus für die Anwendung zur Speicherung von $NH_3$ als günstig erwiesen haben, sind dem Fachmann bekannt (US20060010857A1, WO2004076829A1). Als Speichermaterialien kommen insbesondere mikroporöse Feststoffe, z.B. so genannte Molekularsiebe zum Einsatz. Es können solche Verbindungen ausgewählt aus der Gruppe bestehend aus Zeolithen, wie z.B. Mordenite (MOR), Y-Zeolithe (FAU), ZSM-5 (MFI), Ferrierite (FER), Chabazite (CHA) und andere "small pore zeolites" wie LEV, AEI oder KFI, und $\beta$-Zeolithe (BEA) sowie zeolithähnlichen Materialien, wie z.B. Aluminiumphosphate (AlPO) und Siliziumaluminiumphosphat SAPO oder Mischungen davon eingesetzt werden (EP0324082A1). Besonders bevorzugt werden ZSM-5 (MFI), Chabazite (CHA), Ferrierite (FER), ALPO- bzw. SAPO-34 und $\beta$-Zeolithe (BEA) eingesetzt. Ganz besonders bevorzugt werden CHA, BEA und AlPO-34 bzw. SAPO-34 verwendet. Äußerst bevorzugt werden Materialien des LEV- oder CHA-Typs und hier höchst bevorzugt CHA oder LEV oder AEI verwendet. Sofern man als katalytisch aktives Material im SCR-Katalysator schon einen wie eben genannten Zeolithen oder zeolithähnliche Verbindung benutzt, kann naturgemäß die Zugabe weiterer $NH_3$-speichernden Materials vorteilhafter Weise entfallen. Insgesamt sollte die Speicherkapazität der eingesetzten Ammoniakspeicherkomponenten im Frischzustand bei einer Messtemperatur von 200°C mehr als 0.9 g $NH_3$ pro Liter Katalysatorvolumen, bevorzugt zwischen 0,9 g und 2,5 g $NH_3$ pro Liter Katalysatorvolumen und besonders bevorzugt zwischen 1,2 g und 2,0 g $NH_3$/Liter Katalysatorvolumen und ganz besonders bevorzugt zwischen 1,5 g und 1,8 g $NH_3$/Liter Katalysatorvolumen betragen. Die Ammoniakspeicherfähigkeit kann mit Hilfe einer Synthesegasanlage bestimmt werden. Hierzu wird der Katalysator zunächst bei 600°C mit NO-haltigem Synthesegas konditioniert, um Ammoniak Rückstände im Bohrkern vollständig zu entfernen. Nach Abkühlen des Gases auf 200°C wird anschließend, bei einer Raumgeschwindigkeit von z. B. 30000 $h^{-1}$, so lange Ammoniak in das Synthesegas dosiert, bis der Ammoniakspeicher des Bohrkerns vollständig gefüllt ist und die gemessene Ammoniakkonzentration nach dem Bohrkern der Eingangskonzentration entspricht. Die Ammoniakspeicherfähigkeit ergibt sich aus der Differenz der insgesamt dosierten und der abstromseitig gemessenen Ammoniakmenge bezogen auf das Katalysatorvolumen. Das Synthesegas ist hierbei typischerweise aus 450 ppm $NH_3$, 5% Sauerstoff, 5% Wasser und Stickstoff zusammengesetzt.

Im Rahmen der Erfindung ist das Merkmal des Nichtvorhandenseins einer zusammenhängenden Schicht auf den Wänden des Filters dahingehend zu verstehen, dass die Poren der Filterwände nur soweit mit dem verstäubten Pulver aufgefüllt werden, bis maximal die Oberkante der jeweiligen Pore erreicht ist (Fig. 1) und das Pulver beginnt, sich auf den Wänden abzuscheiden. Die Menge an Pulver, die so abgeschieden werden kann, hängt von der Art des Pulvers und dem Volumen der zur Verfügung stehenden Poren ab und kann unter den gegebenen Randbedingungen vom Fachmann in vorläufigen Versuchen bestimmt werden.

Durch den erfindungsgemäßen Filter ist es möglich, eine hohe Filtrationseffizienz insbesondere für kleinpartikuläre Ruße, wie sie aus Ottomotoren emittiert werden, zu erhalten. Der Abgasgegendruck steigt dabei nicht über Gebühr an. Die Filter zeigen eine ausgezeichnete katalytische Aktivität. Der Abgasgegendruck und die Filtrationseffizienz lassen sich gezielt den Kundenanforderungen anpassen. Ein entsprechend hergestellter Wandflussfilter war aus dem Stand der Technik so noch nicht bekannt.

Figuren:

Fig. 1:     Bild einer erfindungsgemäß bestäubten Wandflussfilterwand (Farbfotografie)

Fig. 2:     Erhöhung des Abgasgegendrucks durch die Bestäubung

Fig. 3:     Erhöhung der Filtrationseffizienz durch die erfindungsgemäße Bestäubung

Fig. 4: Schnitt durch eine bestäubte Wandflussfilterwand und die graphische Analyse der Stellen der Bestäubung (Farbfotografie)

Beispiele:

Zur Herstellung der in Beispielen und Vergleichsbeispielen beschriebenen Partikelfilter VGPF, sowie GPF1, GPF2 und GPF3 wurden Cordierit-Wandflussfilter mit einem Durchmesser von 11,8 cm und einer Länge von 13,5 cm in-wand beschichtet. Die Wandflussfilter hatten eine Zelligkeit von 46,5 Zellen pro Quadratzentimeter bei einer Wandstärke von 0,203 mm. Die mittlere Porengröße der Filter betrug 20 $\mu$m, wobei die Porosität der Filter bei ca. 65% lag.

Auf diese Wandflussfilter wurde zunächst eine edelmetallhaltige Beschichtungssuspension aufgebracht. Nach dem Aufbringen der Beschichtungssuspension wurden die Filter getrocknet und anschließend bei 500°C kalziniert. Die Beschichtungsmenge nach Kalzinierung entsprach 50 g/l, bezogen auf das Substratvolumen. Dies entspricht der Präparation des VGPFs.

Beispiel 1:

GPF1: Die offenen Poren eines in-wand beschichteten Filters wurden mit 3,3 g/l, bezogen auf das Gesamtfiltervolumen, eines trockenen Aluminiumoxids erfindungsgemäß belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,175.

Beispiel 2:

GPF2: Die offenen Poren eines in-wand beschichteten Filters wurden mit 5,6 g/l, bezogen auf das Gesamtfiltervolumen, eines trockenen Aluminiumoxids erfindungsgemäß belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,175.

Beispiel 3:

GPF3: Die offenen Poren eines in-wand beschichteten Filters wurden mit 8,6 g/l, bezogen auf das Gesamtfiltervolumen, eines trockenen Aluminiumoxids erfindungsgemäß belegt. Als Pulver wurde ein Aluminiumoxid mit einem mittleren Partikeldurchmesser ($d_{50}$) von 3 $\mu$m verwendet. Dies entspricht einem Verhältnis der mittleren Partikelgröße des verwendeten Pulvers zur mittleren Porengröße des Filters von 0,15.

Die erfindungsgemäßen Partikelfilter GPF1, GPF2 und GPF3 wurden im Vergleich zu dem hergestellten VGPF untersucht. Die Partikelfilter wurden nach der Pulverbelegung auf ihren Staudruck hin vermessen, anschließend fand, wie unten beschrieben, die Filtrationsmessung am dynamischen Motorprüfstand statt. Die Staudruckerhöhung der erfindungsgemäßen Filter ist Fig. 2 gezeigt.

Die beschriebenen Filter VGPF, GPF1, GPF2 und GPF3 wurden am Motorprüfstand im Realabgas eines mit im Mittel stöchiometrischen Luft/Kraftstoff-Gemisch betriebenen Motors hinsichtlich der Frischfiltrationseffizienz untersucht. Dabei wurde ein weltweit einheitliches Testverfahren zur Bestimmung der Abgasemissionen, kurz WLTP (Worldwide harmonized Light vehicles Test Procedure), angewendet. Der verwendete Fahrzyklus war WLTC Class 3. Der jeweilige Filter wurde motornah direkt nach einem konventionellen Dreiwegekatalysator eingebaut. Dieser Dreiwegkatalysator war bei allen gemessenen Filtern derselbe. Jeder Filter wurde einem WLTP unterzogen. Um die Partikelemissionen während der Testung detektieren zu können, wurden die Partikelzähler vor dem Dreiwegekatalysator und nach dem Partikelfilter eingebaut. In Fig. 3 sind die Ergebnisse der Filtrationseffizienzmessung im WLTP zu sehen.

Die Figur 3 zeigt die Ergebnisse der Filtrationseffizienzmessung. Je nach aufgebrachter Pulvermenge sowie der Partikelgrößenverteilung des verwendeten Pulvers ist eine Verbesserung der Filtrationseffizienz bis zu 20% bei einer maximalen Staudruckerhöhung (Fig. 2) von nur ca. 9% zu verzeichnen.

Die gemessenen Daten belegen, dass die selektive Beschichtung der offenen Poren eines bereits in-wand beschichteten Filters zu einer deutlichen Verbesserung der Filtrationseffizienz bei einem nur geringfügig erhöhten Staudruck führt.

Katalytische Charakterisierung

Für die katalytische Charakterisierung wurden die Partikelfilter VGPF2, sowie GPF4, GPF5 verwendet. Die Wandflussfilter hatten eine Zelligkeit von 46,5 Zellen pro Quadratzentimeter bei einer Wandstärke von 0,203 mm. Die mittlere Porengröße der Filter betrug 18 $\mu$m, wobei die Porosität der Filter bei ca. 65% lag.

Auf diese Wandflussfilter wurde zunächst eine edelmetallhaltige Beschichtungssuspension aufgebracht. Nach dem Aufbringen der Beschichtungssuspension wurden die Filter getrocknet und anschließend bei 500°C kalziniert. Die Beschichtungsmenge nach Kalzinierung entsprach 75 g/l, wobei die Konzentration von Pd 1,06 g/L und Konzentration für Rh 0,21 g/L betrug. Alle Konzentrationen bezogen sich auf das Substratvolumen.

Beispiel 4:

GPF4: Die offenen Poren eines in-wand beschichteten Filters wurden mit 10 g/l, bezogen auf das Gesamtfiltervolumen, eines trockenen Aluminiumoxids belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,194.

Beispiel 5:

GPF5: Die offenen Poren eines in-wand beschichteten Filters wurden mit 15,8 g/l, bezogen auf das Gesamtfiltervolumen, eines trockenen Aluminiumoxids belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,194.

Die katalytisch aktiven Partikelfilter VGPF2, GPF4 und GPF5 wurden zunächst im frischen Zustand getestet und anschließend zusammen in einer Motorprüfstandsalterung gealtert. Diese besteht aus einer Schubabschaltungsalterung (Alterung 1) mit 900°C Abgastemperatur vor Katalysatoreingang (Maximale Betttemperatur 970°C). Die Alterungszeit betrug 19 Stunden. Nach der ersten Alterung wurden die Filter auf ihre katalytische Aktivität untersucht und anschließend einer weiteren Motorprüfstandsalterung (Alterung 2) unterzogen. Diese bestand dieses Mal aus einer Schubabschaltungsalterung mit 950°C Abgastemperatur vor Katalysatoreingang (Maximale Betttemperatur 1030°C). Anschließend wurden die Filter wiederholt getestet.

Bei der Untersuchung der katalytischen Aktivität wurde an einem Motorprüfstand das Anspringverhalten (Light-Off) der Partikelfilter bei konstanter mittlerer Luftzahl $\lambda$ und die dynamische Umsetzung bei Änderung von $\lambda$ geprüft. Des Weiteren wurden die Filter einem "lambda Sweeptest" unterzogen.

Die nachfolgenden Tabellen enthalten die Temperaturen $T_{50}$, bei denen jeweils 50% der betrachteten Komponente umgesetzt werden. Dabei wurde das Anspringverhalten bei stöchiometrischer Abgaszusammensetzung ($\lambda$ =0,999 mit $\pm$3,4% Amplitude) bestimmt. Die Standardabweichung beträgt bei diesem Test $\pm$2°C.

Tabelle 1 enthält die "Light-Off"-Daten für die frischen Filter, Tabelle 2 Daten nach Alterung 1 und Tabelle 3 Daten nach Alterung 2.

Tabelle 1

|  | $T_{50}$ HC stöch | $T_{50}$ CO stöch | $T_{50}$ NOx stöch |
|---|---|---|---|
| VGPF2 | 279 | 277 | 278 |
| GPF4 | 279 | 275 | 277 |
| GPF5 | 278 | 274 | 277 |

Tabelle 2

|  | $T_{50}$ HC stöch | $T_{50}$ CO stöch | $T_{50}$ NOx stöch |
|---|---|---|---|
| VGPF2 | 347 | 351 | 355 |
| GPF4 | 350 | 353 | 356 |
| GPF5 | 349 | 352 | 355 |

Tabelle 3

|  | $T_{50}$ HC stöch | $T_{50}$ CO stöch | $T_{50}$ NOx stöch |
|---|---|---|---|
| VGPF2 | 396 | 421 | 422 |
| GPF4 | 398 | 413 | 419 |

(fortgesetzt)

|  | $T_{50}$ HC stöch | $T_{50}$ CO stöch | $T_{50}$ NOx stöch |
|---|---|---|---|
| GPF5 | 394 | 406 | 412 |

Das dynamische Umsatzverhalten der Partikelfilter wurde in einem Bereich für λ von 0,99 bis 1,01 bei einer konstanten Temperatur von 510°C bestimmt. Die Amplitude von λ betrug dabei ±3,4%. Tabelle 3 enthält den Umsatz am Schnittpunkt der CO- und der NOx-Umsatzkurven, sowie den zugehörigen HC-Umsatz der gealterten Partikelfilter. Die Standardabweichung beträgt bei diesem Test ±2%.

Tabelle 4 enthält die Daten für die frischen Filter, Tabelle 5 Daten nach Alterung 1 und Tabelle 6 Daten nach Alterung 2.

Tabelle 4

|  | CO/NOx Umsatz am Kreuzungspunkt | HC Umsatz am λ des CO/NOx Kreuzungspunktes |
|---|---|---|
| VGPF2 | 99% | 99% |
| GPF4 | 99% | 99% |
| GPF5 | 99% | 99% |

Tabelle 5

|  | CO/NOx Umsatz am Kreuzungspunkt | HC Umsatz am λ des CO/NOx Kreuzungspunktes |
|---|---|---|
| VGPF2 | 98% | 97% |
| GPF4 | 98% | 97% |
| GPF5 | 98% | 97% |

Tabelle 6

|  | CO/NOx Umsatz am Kreuzungspunkt | HC Umsatz am λ des CO/NOx Kreuzungspunktes |
|---|---|---|
| VGPF2 | 79% | 94% |
| GPF4 | 80% | 94% |
| GPF5 | 83% | 95% |

Die erfindungsgemäßen Partikelfilter GPF4 und GPF5 zeigen im Vergleich zum VGPF2 keinerlei Nachteil in der katalytischen Aktivität im frischen und moderat gealterten Zustand. In einen stark gealterten Zustand weisen die pulverbelegten Filter GPF4 und GPF5 sogar einen Vorteil sowohl in der CO- wie auch in der NOx-Konvertierung als auch beim dynamischen CO/NOx-Umsatz auf.

**Patentansprüche**

1. Katalytisch aktiver Wandflussfilter zur Verminderung der Schadstoffe im Abgas eines Verbrennungsmotors, wobei dieser mit katalytisch aktivem Material in der Wand beschichtete, trockene Filter auf dessen Eingangsseite dergestalt mit einem trockenen Pulver-Gas-Aerosol, welches eine hochschmelzende Verbindung aufweist, gezielt beaufschlagt wird, dass das Pulver sich in den Poren der Filterwände niederschlägt und keine zusammenhängende Schicht auf den Wänden des Filters ausbildet, **dadurch gekennzeichnet, dass** die Pulverbelegung einen zunehmenden Gradienten von der Einlassseite zur Auslassseite aufweist.

2. Katalytisch aktiver Wandflussfilter nach Anspruch 1, **dadurch gekennzeichnet, dass** das Aerosol ein Gemisch aus Luft und einem hochschmelzenden Metalloxid-, Metallsulfat-, Metallphosphat-, Metallcarbonat- oder Metallhydroxidpulver ist.

3. Katalytisch aktiver Wandflussfilter nach einem der vorhergehenden Ansprüche,
**dadurch gekennzeichnet, dass**
die katalytisch aktive Beschichtung des Filters ausgewählt ist aus der Gruppe bestehend aus Dreiwegkatalysator, SCR-Katalysator, Stickoxidspeicherkatalysator, Oxidationskatalysator, Rußzündbeschichtung, Kohlenwasserstoffspeicher.

4. Katalytisch aktiver Wandflussfilter nach Anspruch 3,
**dadurch gekennzeichnet, dass**
die katalytisch aktive Beschichtung des Filters aus mindestens einem metallionenausgetauschten Zeolithen, Cer/Zirkoniummischoxid, Aluminiumoxid und Palladium, Rhodium oder Platin oder Kombinationen dieser Edelmetalle besteht.

5. Katalytisch aktiver Wandflussfilter nach einem der vorhergehenden Ansprüche,
**dadurch gekennzeichnet, dass**
dieser eine Beladung mit der katalytischen Beschichtung von 20 g/l bis 200 g/l, bezogen auf das Volumen des Filters, aufweist.

6. Katalytisch aktiver Wandflussfilter nach einem der vorhergehenden Ansprüche,
**dadurch gekennzeichnet, dass**
das Verhältnis von mittlerem Partikeldurchmesser (gemessen gemäß neuester IS 13320 am Anmeldetag) d50 im trockenen Aerosol und dem mittleren Porendurchmesser des Filters nach der Beschichtung mit Washcoat (gemessen nach DIN 66134 neueste Fassung am Anmeldetag) zwischen 0,03 und 2 beträgt.

7. Katalytisch aktiver Wandflussfilter nach einem der vorhergehenden Ansprüche,
**dadurch gekennzeichnet, dass**
die Beladung des Filters mit dem Pulver nicht mehr als 50 g/l bezogen auf das Volumen des Filters beträgt.

8. Katalytisch aktiver Wandflussfilter nach einem der vorhergehenden Ansprüche,
**dadurch gekennzeichnet, dass**
das Pulver ebenfalls hinsichtlich der Verminderung der Schadstoffe im Abgas eines Verbrennungsmotors katalytisch aktiv ist.

9. Katalytisch aktiver Wandflussfilter nach einem der vorhergehenden Ansprüche,
**dadurch gekennzeichnet, dass**
dieser eine Erhöhung der Filtrationseffizienz von mindestens 5% bei einer relativen Erhöhung des Abgasgegendruck von höchstens 10% verglichen mit einem nicht mit Pulver behandelten frischen mit katalytisch aktivem Material beschichteten Filter aufweist.

10. Verfahren zur Herstellung eines katalytisch aktiven Wandflussfilters nach einem der vorhergehenden Ansprüche,
**dadurch gekennzeichnet, dass**
ein Trägergas mit einem Pulver beaufschlagt wird und dieses in einen Filter eingesaugt wird.

11. Verfahren zur Herstellung eines katalytisch aktiven Wandflussfilters nach Anspruch 11,
**dadurch gekennzeichnet, dass**
das Aerosol mit einer Geschwindigkeit von 5 m/s bis 50 m/s durch den Filter gesaugt wird.

12. Verfahren zur Herstellung eines katalytisch aktiven Wandflussfilters nach einem der vorhergehenden Ansprüche 11 und/oder 12,
**dadurch gekennzeichnet, dass**
das Pulver eine Feuchtigkeit von weniger als 20% im Zeitpunkt der Beaufschlagung des Wandflussfilters besitzt.

13. Verwendung eines katalytisch aktiven Wandflussfilters nach einem der Ansprüche 1 bis 10 zur Minderung schädlicher Abgase eines Verbrennungsmotors.

Fig. 1:

Fig. 2:

Fig. 3

Fig. 4

Europäisches
Patentamt

European
Patent Office

Office européen
des brevets

**EUROPÄISCHER RECHERCHENBERICHT**

Nummer der Anmeldung

**EP 23 16 1527**

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X,D | US 2016/310935 A1 (SUTTON NEAL [GB] ET AL) 27. Oktober 2016 (2016-10-27) * Absätze [0012] - [0014], [0029], [0030], [0036] - [0042], [0067] - [0070] * * Beispiele 2,4,5 * ----- | 1-13 | INV. B01J35/00 B01J21/04 B01J23/46 B01D53/94 B01J37/02 F01N3/035 B01D46/24 |
| A,D | US 2013/149440 A1 (PYZIK ALEKSANDER J [US] ET AL) 13. Juni 2013 (2013-06-13) * Absätze [0012], [0014], [0024], [0033], [0035], [0044] - [0046], [0056], [0058], [0063], [0064] * ----- | 1-13 | |
| A | DE 10 2012 220181 A1 (FRAUNHOFER GES ZUR FÖRDERUNG DER ANGEWANDTEN FORSCHUNG E V [DE]) 8. Mai 2014 (2014-05-08) * Absätze [0011], [0014], [0029] - [0059] * ----- | 1-13 | |
| A | EP 1 775 022 A1 (HONDA MOTOR CO LTD [JP]) 18. April 2007 (2007-04-18) * Absätze [0001], [0018], [0024] - [0035], [0042], [0046] - [0048], [0052], [0055] * ----- | 1-13 | RECHERCHIERTE SACHGEBIETE (IPC) B01J B01D F01N |
| A | EP 2 106 835 A1 (HITACHI METALS LTD [JP]) 7. Oktober 2009 (2009-10-07) * Absätze [0012], [0013], [0036], [0037], [0039], [0041] * * Beispiel 1 * ----- | 1-13 | |

Der vorliegende Recherchenbericht wurde für alle Patentansprüche erstellt

| Recherchenort | Abschlußdatum der Recherche | Prüfer |
|---|---|---|
| Den Haag | 14. Juni 2023 | Hackenberg, Stefan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 1527

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2023

| Im Recherchenbericht angeführtes Patentdokument | Datum der Veröffentlichung | Mitglied(er) der Patentfamilie | Datum der Veröffentlichung |
|---|---|---|---|
| US 2016310935 A1 | 27-10-2016 | BR 112012030599 A2 | 13-06-2017 |
| | | CN 103079683 A | 01-05-2013 |
| | | EP 2576021 A1 | 10-04-2013 |
| | | JP 5865356 B2 | 17-02-2016 |
| | | JP 2013534463 A | 05-09-2013 |
| | | KR 20130111979 A | 11-10-2013 |
| | | KR 20180098416 A | 03-09-2018 |
| | | RU 2012157520 A | 20-07-2014 |
| | | US 2013243659 A1 | 19-09-2013 |
| | | US 2016310935 A1 | 27-10-2016 |
| | | WO 2011151711 A1 | 08-12-2011 |
| US 2013149440 A1 | 13-06-2013 | BR 112013003305 A2 | 07-06-2016 |
| | | CA 2808632 A1 | 08-03-2012 |
| | | CN 103270002 A | 28-08-2013 |
| | | EP 2611756 A1 | 10-07-2013 |
| | | JP 5782124 B2 | 24-09-2015 |
| | | JP 2013540582 A | 07-11-2013 |
| | | KR 20130105818 A | 26-09-2013 |
| | | US 2013149440 A1 | 13-06-2013 |
| | | WO 2012030534 A1 | 08-03-2012 |
| DE 102012220181 A1 | 08-05-2014 | DE 102012220181 A1 | 08-05-2014 |
| | | EP 2727640 A1 | 07-05-2014 |
| | | EP 3981493 A1 | 13-04-2022 |
| EP 1775022 A1 | 18-04-2007 | KEINE | |
| EP 2106835 A1 | 07-10-2009 | CN 101522281 A | 02-09-2009 |
| | | EP 2106835 A1 | 07-10-2009 |
| | | JP 5444716 B2 | 19-03-2014 |
| | | JP WO2008066167 A1 | 11-03-2010 |
| | | US 2010011726 A1 | 21-01-2010 |
| | | WO 2008066167 A1 | 05-06-2008 |

EPO FORM P0461

Für nähere Einzelheiten zu diesem Anhang : siehe Amtsblatt des Europäischen Patentamts, Nr.12/82

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1064094 B1
- EP 2521618 B1
- WO 10015573 A2
- EP 1136462 B1
- US 6478874 B1
- US 4609563 A
- WO 9947260 A1
- JP 5378659 B
- EP 2415522 A1
- JP 2014205108 A
- WO 2005016497 A1
- JP H01151706 B
- EP 1789190 B1
- WO 2011151711 A1
- WO 2012030534 A1
- US 8277880 B2
- EP 250266 A1
- EP 2502662 B1
- EP 2727640 A1
- WO 2015049110 A1
- DE 4225970 C1
- US 8495968 B2
- US 8632852 B2
- US 8534221 B2

- EP 2371451 B1
- EP 2371452 B1
- EP 2388072 A1
- EP 1181970 B1
- EP 1541220 B1
- WO 2008113445 A1
- WO 2008000449 A2
- EP 1911506 A1
- US 6605264 BB
- US 6468941 B
- WO 05113126 A1
- US 6387338 B
- US 7041622 BB
- EP 2042225 A1
- WO 2010097146 A1
- WO 2015143191 A1
- EP 1147801 B1
- DE 2832002 A1
- EP 0311758 A1
- EP 0324082 A1
- WO 1309270711 A1
- WO 2012175409 A1
- US 20060010857 A1
- WO 2004076829 A1

**In der Beschreibung aufgeführte Nicht-Patentliteratur**

- **R. HECK et al.** *Catalytic Air Pollution Control, Commercial Technology,* 1995, 90
- **G. TUENTER et al.** *Ind. Eng. Chem. Prod. Res. Dev.,* 1986, vol. 25, 633-636
- **KASAOKA et al.** *Nippon Kagaku Kaishi,* 1978, vol. 6, 874-881

- **AVILA et al.** *Atmospheric Environment,* 1993, vol. 27A, 443-447
- **T. MAYER.** Feststoff-SCR-System auf Basis von Ammoniumcarbamat. *Dissertation, TU Kaiserslautern,* 2005